# EUROPÄISCHE PATENTSCHRIFT

(11) **EP 3 366 261 B1**
(45) Veröffentlichungstag und Bekanntmachung des Hinweises auf die Patenterteilung: **10.06.2020**
(21) Anmeldenummer: 17197586.5
(22) Anmeldetag: 20.10.2017
(51) Int. Cl.: A61C 17/02, A61C 17/22, A61C 19/06, A46B 9/04, A46B 11/00

(54) **ZAHNSCHIENE ZUR ZAHNREINIGUNG**
DENTAL TRAY FOR CLEANING TEETH
GOUTTIÈRE DE NETTOYAGE DES DENTS

(30) Priorität: 28.02.2017 DE 102017104139
(43) Veröffentlichungstag der Anmeldung: 29.08.2018
(73) Patentinhaber: Al Machot, Elyan, 01099 Dresden (DE); El Machot, Mahmod, 10625 Berlin (DE)
(72) Erfinder: Al Machot, Elyan, 01099 Dresden (DE); El Machot, Mahmod, 10625 Berlin (DE)
(74) Vertreter: Lippert Stachow Patentanwälte Rechtsanwälte Partnerschaft mbB

(56) Entgegenhaltungen:
- EP-A2- 0 761 181
- WO-A1-01/97709
- DE-A1-102014 008 956
- US-A1- 2011 027 746
- US-A1- 2014 093 836
- US-A1- 2015 044 628

## Beschreibung

Die Erfindung betrifft eine Vorrichtung zur Zahnreinigung, insbesondere zur gleichzeitigen Reinigung sämtlicher vorhandener Zähne und/oder fest montierter Prothesen des Unter- und Oberkiefers einer Person oder eines Tieres beliebigen Alters.

Während es parodontale Erkrankungen so lange gibt, wie die Menschheit selbst, hat sich Karies als ein allgemeines Problem mit der Entwicklung von Fluor und der Verwendung von Zucker sowie der allgemein verstärkten Verwendung von Kohlehydraten herausgebildet. In der Folge haben sich parodontale Erkrankungen und Karies in den letzten 500 Jahren als die häufigsten Erkrankungen, welche den menschlichen Mund betreffen, herausgestellt [1].

Jedoch ist ein detailliertes Verständnis der speziellen Wirkungen von verschiedenen Mikroorganismen und der speziellen Mechanismen der Abwehr und der Zerstörung des Gewebes noch unvollständig. Es erscheint Übereinstimmung darin zu bestehen, dass das gegenwärtige Fachwissen die aktuelle Annahme bestätigt, dass der bakterielle Belag eine unmittelbare Ursache für Gingivitis und Parodontitis bei Erwachsenen ist und dass es ohne den Belag keine Karies, Gingivitis und Parodontitis bei Erwachsenen geben würde.

Während der letzten 50 Jahre hat eine umfangreiche Forschung in Bezug auf verschiedene Aspekte des Zahnbelags und dessen Entfernung stattgefunden. Seit 1966 wurde in verschiedenen wichtigen internationalen Workshops und Symposien über die Entfernung des Zahnbelags und dessen Auswirkungen auf die Gesundheit diskutiert. Anlässlich des Europäischen Workshops betreffend die mechanische Entfernung des Zahnbelags wurde am 12 Mai 1998 folgende Strategie einstimmig angenommen [2]: "Vierzig Jahre experimentelle Forschung, klinische Tests und Untersuchungen in unterschiedlichen geographischen und sozialen Umgebungen haben bestätigt, dass eine effektive Entfernung des Zahnbelags von grundlegender Bedeutung für die Zahn- und Zahnfleischgesundheit während des gesamten Lebens ist. Deshalb wird vorgeschlagen, dass das bei der Entwicklung von Gesundheitsstrategien auf nationaler und internationaler Ebene berücksichtigt werden soll. Solche Strategien, Ziele und Richtlinien sollten bei der Ausbildung von Zahnfachleuten und anderen Gesundheitsexperten aktiv gefördert werden. Berufsverbände sollten hier eine wichtige Rolle bei der Entwicklung, Durchsetzung und Umsetzung dieser Strategien übernehmen."

WHO Daten zeigen, dass die Prävalenz von Karies seit dem Ende der letzten Dekade und der ersten Dekade dieses Jahrhunderts weltweit zurückgegangen ist. Diese Verringerung ging mit der zunehmenden Verwendung von fluorisierter Zahnpasta einher. Dieser Rückgang begann, als die Verwendung fluorisierter Zahnpasta allgemein üblich wurde. Gerade dieser Rückgang ist mit einer 90 %-igen Reduzierung der DMFT bei 12-Jährigen in Westeuropa und den USA verbunden, wobei Karies immer noch bei 60 - 90 % der Kinder weltweit auftritt [3] .

Die plaqueinduzierte Gingivitis ist in der Bevölkerung bei Kindern und Erwachsenen global allgegenwärtig [4]. Es wurde bei jungen Kindern festgestellt, dass sowohl die Prävalenz, als auch die Schwere der Gingivitis während der Pubertät zunimmt und sich in Richtung zu älteren Erwachsenen einpendelt [5].

Daten über die Prävalenz der Gingivitis in Europa und Nordamerika zeigen, dass über 60% der Jugendlichen und 40 - 50% der Erwachsenen Gingivitis haben [6]. In Deutschland liegt die Prävalenz der Parodontitis bei 70,9% der Altersgruppe von 35 - 44 Jahren und 87,4% in der Altersgruppe der 65 - 77 jährigen [7]. Mehr als 47% der 30 Jährigen oder Älterer hatten in den Vereinigten Staaten eine Parodontitis [8]. Die Prävalenz der Parodontitis unterscheidet sich zwischen der Bevölkerung/den Ländern und mag in höher entwickelten Ländern höher sein [9].

Die Prävalenz von Gingivitis, Parodontitis und Karies bleibt hoch. Darüber hinaus ist Periimplantitis ein neu entstehendes allgemeines Gesundheitsproblem. Querschnittsuntersuchungen haben gezeigt, dass moderate und schwere Formen der Periimplantitis bei Subgruppen von 15 - 20% der Implantatträger auftreten [10, 11, 12].

Derart hohe Belastungen durch Karies, Zahnfleischentzündung und Peri-Implantitis und deren soziale, Mund- und körperlichen Konsequenzen sind zwingende Gründe für eine verstärkte Aufmerksamkeit in Richtung Prävention Einzelner, der Fachleute und der Verantwortlichen im Gesundheitswesen [3, 13].

Die Sicherstellung einer effektiven Entfernung des Zahnbelags ist ein Eckstein für den Versuch, Karies und parodontale Erkrankungen zu verhindern und zu beherrschen. Ältere Langzeitstudien zum natürlichen Krankheitsverlauf der Parodontitis bei einer dental gut versorgten männlichen Population haben gezeigt, dass eine persistierende Gingivitis einen Risikofaktor in Bezug auf den parodontalen Attachmentverlust und Zahnverlust darstellt [14, 15]. Evidenz basierte Daten aus großen Kohortenstudien haben gezeigt, dass ein hoher Standard der Mundhygiene die Stabilität des parodontalen Gewebes sichert und das Entstehen von Karies reduziert [16, 17, 18]. Gegenwärtige Studien zeigen, dass sowohl die primäre Prävention der Gingivitis als auch die primäre und sekundäre Prävention der Parodontitis auf dem Ergebnis einer ausreichenden Entfernung des Zahnbelags basiert [13]. Aus diesem Grund verfolgt die dentale Gemeinschaft weiterhin eine angemessene Mundhygiene und einen effektiveren Gebrauch von mechanischen Reinigungsmitteln [1, 13, 19].

Eine akribische Maßnahme zur selbst durchgeführten Beseitigung des Zahnbelags kann sowohl die Quantität als auch die Zusammensetzung der subgingivalen Plaque verändern.

Eine optimale Mundhygiene erfordert eine angemessene Motivation des Patienten, sowie entsprechende Vorrichtungen und professionelle Mundhygieneanweisungen [13]. Die persönliche Mundhygiene bezieht sich auf die Bemühungen des Patienten, den supragingivalen Belag zu entfernen. Zahnbürsten der verschiedensten Ausführungen sind eine wichtige Hilfe bei der mechanischen Entfernung des Zahnbelags und deren Anwendung ist zumeist universell möglich. Darüber hinaus ist eine fluorisierte Zahnpasta ein wesentlicher Bestandteil der täglichen häuslichen Mundpflege [21]. Der allererste Schritt für eine gute Zahnhygiene besteht in der Auswahl einer entsprechenden Zahnbürstenart. Es ist höchst wünschenswert, dass die Zähne nach jeder Mahlzeit, oder zumindest nach dem Frühstück und vor den Zu-Bett-Gehen, gereinigt werden und es ist nicht nur wichtig den Gebrauch der Zahnbürste beizubehalten, sondern auch entsprechende Putztechniken anzubieten, um Karies und parodontale Erkrankungen zu vermeiden [22].

Mundhygieneprogramme zielen auf die Erziehung und Motivation von Patienten, ein korrektes Selbstpflegeregime zu erreichen, was jedoch nicht immer erfolgreich ist. Jede Person entwickelt ihren eigenen Zahnputzstil. Die Tendenz eines Rückfalls in alte Gewohnheiten ist ein bekanntes Problem [23, 24, 25].

Darüber hinaus gibt es viele physisch oder mental behinderte Personen, die unwillig oder nicht in der Lage sind, eine reguläre und effektive Mundhygiene, wie verlangt, durchzuführen [26]. Das Erfordernis, ein besonders sorgfältiges Verhalten bei diesen Personen zu erreichen, lässt sich durch Verstärkung des Trainingsaufwandes als Ziel ausbilden. Eine Art der Eigenfürsorge, die Beachtung gefunden hat, ist das Zähneputzen. Zwei unterstützende Maßnahmen zusätzlich zum Zähneputzen sind für diese Patienten verfügbar: Die professionelle mechanische Zahnreinigung und antibakterielle Spülungen oder Sprays.

Der Gebrauch von chemischen Stoffen sollte als adjunktive Maßnahme und nicht als Ersatz für die mechanische Entfernung des Zahnbelags angesehen werden, da das nicht ausreichen würde. Der ständige Gebrauch von chemischen Stoffen sollte jedoch wegen der Nebeneffekte, die auftreten können, vermieden werden. Der europäische Workshop der Parodontologie (1994) hat beschlossen dass: "der Gebrauch von chemischen Belagentfernern und von aktiven Chlorhexidin-Produkten ist mittelfristig hilfreich, insbesondere wenn eine mechanische Zahnreinigung nicht möglich bzw. schwierig und damit unzureichend war". Es ist wichtig zu betonen, dass der Gebrauch einer Chlorhexidin-Spülung oder von anderen antibakteriellen Lösungen als eine adjunktive Maßnahme zur täglichen mechanischen Mundhygiene, die auf betrieblichen diagnostischen Kriterien basieren; angemessen beobachtet werden sollten; und dass die Häufigkeit der Anwendung auf der Basis von Krankheitsbildern vorgeschrieben werden sollte. Chlorhexidin-Lösungen haben keine Wirkung bei Parodontitis; und es gibt keine Daten die suggerieren, dass Chlorhexidin irgendeine Wirkung auf etablierte kariöse Läsionen hat.

Für anfällige, behinderte und im Krankenhaus befindliche Patienten sollten Programme zur Entfernung des Zahnbelags auf der physischen und mentalen Kapazität des Patienten und der Verfügbarkeit und Fachkenntnis von Betreuern basieren. Das verstärkte Vorkommen von dentalen und parodontalen Erkrankungen bei diesen Patienten legt nahe, dass eine Notwendigkeit für die Verstärkung der professionellen Verantwortlichkeit und Aufsicht besteht und die Beteiligung der Betreuer bei der Mundhygiene beeinflusst die im Krankenhaus befindlichen Patienten [27].

Während sich verschiedene veröffentlichte Berichte, Trainingsprogramme und Lehrbücher auf das Training des Zahnputzverhaltens fokussieren, scheint die eine oder andere Begrenzung die Anwendung unpraktisch und schwierig zu gestalten: (1) ungenügende Aufgabenstellung oder ungenügende Aufgabenbeschreibung, (2) unspezifizierte oder mehrdeutige Information bezüglich der Lehrtechnik, und (3) unspezifizierte Entwicklung der Programmeffektivität und einer didiaktischen Struktur.

Die klassischen manuellen Zahnbürsten mit einem flachem Kopf, Schweineborsten und einem Holz- oder Elfenbeinhandgriff sind seit 100 Jahren verfügbar. Jedoch hat sich das Zähneputzen bis in die 1930-er Jahre nicht allgemein durchgesetzt, bis das Aufkommen von Nylonbürsten mit Kunststoffhangriffen die Zahnbürsten erschwinglich machte. Seit dieser Zeit haben Fantasie und Erfindergabe das Bürstendesign sowie weitere Details erschöpft. Dennoch haben sich verschiedene Workshops und Meetings mit den Aspekten der Mundhygiene befasst, um einen speziellen Zahnbürstentyp und Design zu empfehlen, um festzustellen, dass moderne Zahnbürsten erfolgreiche Hilfen bei der persönlichen Mundhygiene sind, vorausgesetzt, dass die Person, welche diese benutzt, hinreichend motiviert und über deren Gebrauch instruiert ist [2].

Anlässlich des Europäischen Workshops über Mechanische Zahnbelagentfernung im Jahre 1988 wurden folgende Eigenschaften einer akzeptablen Zahnbürste als wichtig angesehen: ein Handgriff entsprechend dem Alter des Benutzers und dessen Fingerfertigkeit und eine Kopfgröße entsprechend der Größe des Mundes des Benutzers mit abgerundeten Nylon- oder Polyesterfasern, die größer als 0,009 Zoll (0,023 mm) im Durchmesser als weiche Borstenkonfiguration entsprechend des akzeptablen internationalen Industriestandards (ISO) mit Borstenmustern, welche die Entfernung des Belags im Zahnzwischenraum und entlang des Zahnfleischrandes verbessert.

Verschiedene Studien wurden bereits durchgeführt, um Methoden zur Beurteilung des Bürstens in Form der Bürstbewegung [28, 29, 30], dem Bürstverhalten betreffend der Gebiete des Mundes, die gebürstet werden, sowie der Dauer des Bürstens, zu finden; aber es konnte kein Verfahren veranschaulicht werden, um ein Lehr-Bürstmuster vorzuschlagen oder zu schulen. In einem systematischen Review hinsichtlich der mechanischen Entfernung des Belags durch Patienten wurde festgestellt, dass die Qualität der Entfernung des Belags nicht ausreichend effektiv war und verbessert werden sollte [31].

Zweifellos ist es für die gut motivierte und ausreichend informierte Person, die bereit ist, Zeit und Mühe zu investieren, klar, dass mechanische Maßnahmen zur Entfernung des Belags effektiv sind. Andererseits zeigen die klinische Praxis und verschiedene Gruppenstudien, dass die technische Fähigkeit, Zeit und Ausdauer, die erforderlich ist, um eine kontinuierliche Aufrechterhaltung eines hohen Standards der Mundreinigung zu gewährleisten, die Fähigkeiten der Durchschnittsperson übersteigen.

Sämtliche Faktoren, die in dem obigen Report erwähnt wurden und die Suche nach alternativen Methoden überwinden die Mängel bei der mechanischen Zahnreinigung.

Aus der US 2014/0093836 A1 geht ein Freihand-Zahnpflegesystem hervor, bei dem ein elastisches Mundstück einen bogenförmigen Kanal aufweist, der dem Zahnverlauf des Nutzers folgt. Das Mundstück kann aus Gummi, Polyurethan oder einem anderen Polymer bestehen und umfasst einen inneren und äußeren Rand als Dichtelement aus einem elastischen Material, wie Gummi. Weiterhin befinden sich im Kanal einwärts und aufwärts gerichtete Borsten zur Reinigung der Zahnoberfläche.

Weiterhin umfasst das Mundstück mechanische Schwingungserzeuger, beispielsweise einen piezoelektrischen Schwingungserzeuger, der Schwingungen um 20.000 Hz erzeugt und wobei die Frequenz während der Zahnreinigung veränderbar ist.

Die US 2015/0044628 A1 betrifft ebenfalls eine Vorrichtung zur Zahnbehandlung, insbesondere zum Weißen der Zähne, mit einem wannenförmigen Kanal zur Aufnahme einer Substanz, wie ein Oxidationsmittel in Form einer Flüssigkeit oder einem Gel. In der Wand des Kanals befinden sich Elemente zum Energieeintrag mittels LED, Elektroden oder piezoelektrischen Elementen.

In der DE 10 2014 008 956 A1 wird eine Vorrichtung zur Zahnreinigung mit einer Schall-Zahnschiene beschrieben, die mit einem Griffelement versehen ist. Die Zahnschiene entspricht etwa dem Zahnverlauf eines Kiefers. In einem die Zähne umgebenden Strömungskanal sind auswechselbare Borsten in einem Winkel von 45°. Der Strömungskanal dient auch zur Aufnahme eines Gemischs aus Zahncreme und Speichelflüssigkeit. Die Schallerzeugung erfolgt durch eine Schallerzeugungseinrichtung in der Zahnschiene.

Weiterhin wird in der WO 01/97709 A1 eine Zahnreinigungsvorrichtung mit einer Druck-Saug-Einrichtung für eine Reinigungsflüssigkeit beschrieben. Dazu wird ein Endstück an einen zu reinigenden Zahn angesetzt, oder das Endstück hat die Form einer Rinne, die über die zu reinigenden Zähne gestülpt wird.

Die EP 0 761 181 A2 bezieht sich auf einen Reinigungslöffel mit u-förmigem Querschnitt zum Entfernen von Zahnbelägen, der weitgehend an an die geometrischen Bedingungen im Mund angepasst ist und der einen Aufnahmeraum für ein Reinigungsmittel sowie eine Dichtung aufweist. Auf der Innenseite des Reinigungslöffels befinden sich entweder Ultraschallschwinger, oder das Reinigungsmittel wird über Düsen gezielt zugeleitet, um eine Reinigungswirkung des Reinigungsmittels zu generieren. Der als Kunststoffformkörper ausgebildete Reinigungslöffel ist dennoch zusätzlich mit einer Dichtung versehen, die aus einer umlaufend angeordneten Lippe aus dauerelastischem Silikon besteht, um eine hinreichende Abdichtung zu erreichen.

Schließlich geht aus der US 2011/0027746 A1 eine Mundpflegevorrichtung mit Kappen hervor, welche die Ober- und Unterkiefer einschließen und die mit Düsen zum Zuführen einer Reinigungsflüssigkeit mittels externer Pumpen und Vakuumunterstützung versehen sind. Die Kappen, die mit Hilfe externer Schwingungserzeuger in lineare oder Drehschwingungen versetzt werden können, können mit Hilfe eines Vakuumabdrucks an einzelne Anwender angepasst werden. Innerhalb der Kappen können Reibelemente, Polierelemente und Additive für Reinigungs- oder Behandlungszwecke vorgesehen sein.

Der Erfindung liegt daher die Aufgabe zugrunde, eine individuelle Vorrichtung zur Zahnreinigung zu schaffen, mit der gleichzeitig und selbsttätig sämtliche Zähne und/oder fest montierte Prothesen jeweils des Ober- oder des Unterkiefers ohne Zutun der jeweiligen Person gereinigt werden können, wobei vorhandenes Plaque bzw. sonstige bakterielle Beläge auch am Zahnhals und im Übergang zum Zahnfleisch vollständig entfernt werden.

Die der Erfindung zugrunde liegende Aufgabe wird gelöst durch eine Vorrichtung zur Zahnreinigung, insbesondere zur gleichzeitigen Reinigung sämtlicher vorhandener Zähne und/oder fest montierter Prothesen des Unter- und Oberkiefers einer Persone oder eines Tieres beliebigen Alters, mit einer durch 3-D-Scan des Ober-/Unterkiefers einschließlich vorhandener Zähne oder einer Positivkopie eines Zahnabdruckes des Ober-/Unterkiefers auf die individuelle Form des menschlichen oder tierischen Ober-/Unterkiefers einschließlich vorhandener Zähne angepassten und in Schwingungen versetzbaren, einen Innenraum aufweisenden Kappe mit einem U-förmigen Querschnitt, sowie einer im Innenraum zusätzlich vorsehbaren Vielzahl von Borsten, wobei die Kappe mit einem Handgriff zur Medien- und Energiezuführung verbunden ist, wobei zumindest die Kappe ein Ausdruck eines 3-D-Druckers entsprechend dem 3-D-Scan oder der Positivkopie des Zahnabdruckes ist, wobei die Borsten gleichzeitig mit dem 3-D Druck in die Kappe einarbeitbar sind, oder sich auf einer wechselbaren Matte befinden, und wobei die Kappe dichtend auf das die Zähne umgebende Zahnfleisch am Zahnhals, dem Innenraum umschließend, aufsetzbar ist, derart, dass die Zähne und der Zahnhals bzw. der Übergang vom Zahn zum Zahnfleisch vollständig und dicht von dem Innenraum umschlossen sind, und wobei die inneren Enden der Borsten einen Zahnraum umschließend an sämtlichen Zahnkronen und dem jeweiligen Zahnhals (5) mit einer vorgegebenen Druckkraft und einem vorgegebenen Winkel anliegen und auch in die Zahnzwischenräume ragen.

Die vorstehend verwendete Formulierung "Ober-/Unterkiefer" soll bedeuten, dass sowohl für den Ober-, als auch für den Unterkiefer eine individuell angepasste und in Schwingungen versetzbare Kappe vorgesehen ist, wobei beide Kappen auch gemeinsam an einem Handgriff montiert sein können, so dass eine gleichzeitige Behandlung der Zähne des Ober- und Unterkiefers möglich ist. Wichtig ist, dass die jeweilige Kappe individuell an den jeweiligen Kiefer und das die Zahnhälse umgebende Zahnfleisch angepasst ist, so dass eine ausreichende Abdichtung des Innenraumes ohne zusätzliche Dichtmittel, die natürlich auch in Frage kommen können, erreicht wird. Jedenfalls soll die Anwendung der Kappe ohne besondere Fachkenntnis von Jedermann möglich sein und insbesondere soll eine Einflussnahme auf den Reinigungsvorgang in der Kappe ausgeschlossen sein, so dass bei wiederholter Anwendung ein gleichbleibendes Ergebnis erzielt wird. Die Kappe entspricht grundsätzlich der Form eines Zahnabdrucklöffels.

In einer ersten Ausgestaltung der Erfindung besteht zumindest die Kappe aus einem elastischen Material, wie einem Kunststoff, oder einem unelastischen Material, wie Keramik, Titan oder einem anderen mundverträglichen Material, was einerseits eine kostengünstige Herstellung ermöglicht und andererseits materialbedingte allergische Reaktionen vermeidet, also biokompatibel ist und/oder im besten Fall antibakteriell sein kann.

Der 3D Druck ist dabei die einfachste und schnellste Möglichkeit, individuell angepasste Kappen herzustellen. Der besondere Vorteil hierbei ist, dass der Abstand zur Zahnoberfläche auf diese Weise vor der Herstellung der Kappe genauer bestimmt werden kann.

Weiterhin kann der Handgriff mit der Kappe fest, oder lösbar verbunden sein, wobei der Handgriff mit einem fluorisierten flüssigen oder pastösen Zahnpflege- und/oder antibakteriellen Mittel, oder einem Gel oder einer Reinigungsflüssigkeit befüllbar ist oder zumindest mit entsprechenden externen Vorräten verbindbar ist, derart, dass eine dosierte Befüllung des Innenraumes (Lumen) ermöglicht wird. Darüber hinaus erfolgt über den Handgriff die Nötige Medien- und Energiezuführung.

Die individuell angepasste Kappe kann für die mechanische Entfernung des Zahnbelags mit einem Kanalisationssystem ausgestattet sein, bei dem in der Kappe mittels Druckluft ein aus entsprechenden externen Vorräten ausgeworfener Strahl aus Wasser mit einem zugemischten Pulver aus Salz und Sand einen entsprechenden Reinigungseffekt erzielt. Das Pulver kann aus Natriumkarbonat oder ein Glycin-Pulver sein, um eine verbesserte Reinigungswirkung zu erzielen, oder um die Reinigungszeit zu verkürzen.

Bei der Anwendung einer Kappe, wie vorstehend beschrieben, kann eine Reinigungswirkung durch Kavitationskräfte infolge der in Schwingungen versetzten Flüssigkeit in der erreicht werden.

Die wechselbare Matte kann entweder durch Klebematerialien, durch Druck (Klemmen) oder an Schienen an der Innenseite der Kappe befestigt sein. Bevorzugt bestehen die Borsten aus Nylon oder Polyester, deren freie Enden abgerundet oder speziell ausgebildet sind.

Alternativ zu Borsten kann die Matte mit Gumminoppen versehen sein, oder die Matte weist spezielle Eigenschaften auf, mit denen ein Reinigungseffekt erzielt werden kann.

In einer Fortführung der Erfindung ist die Kappe mit einem Antrieb gekoppelt, der die Borsten und/oder die Kappe in translatorische oder rotatorische Schwingungen mit fester oder einstellbarer Amplitude versetzt, oder der Schall- oder Ultraschallschwingungen generiert. Die mechanische Reinigungswirkung entfaltet sich hier durch die Bewegung der Borsten auf der Zahnkrone und dem angrenzenden Zahnfleisch und zugleich durch die beschriebene Kavitationswirkung des ebenfalls in Schwingungen versetzten in den Innenraum zugeführten Zahnpflegemittels. Der Antrieb kann auch ein Piezoantrieb sein, der Schall- oder Ultraschallschwingungen generiert.

Weiterhin kann der Kappe ohne Borsten ein Plasmaerzeuger zugeordnet sein, der nach dem Aufsetzen der Kappe auf den Ober-/Unterkiefer und nach Erzeugen eines ausreichenden Unterdrucks im Innenraum (Lumen) der Kappe ein Plasma zündet, oder alternativ kann im Innenraum UV-Strahler angeordnet sein, der nach dem Aufsetzen der Kappe auf den Ober-/Unterkiefer aktiviert wird, so dass eine zusätzliche antibakterielle Wirkung erzielt wird. Eine Kappe ohne Borsten ist aber nicht Teil der vorliegenden in den Ansprüchen definierten Erfindung.

Alternativ und mit der gleichen Wirkung kann der Innenraum der Kappe auch mit Ozon befüllt sein, oder eine Laserapplikation enthalten.

Die praktische Anwendung der erfindungsgemäßen Vorrichtung zur Zahnreinigung ist denkbar einfach, denn der Benutzer muss lediglich die für den entsprechenden Kiefer vorgesehene Kappe mit oder ohne Borsten auswählen und bündig auf die Zähne aufsetzen, so dass der Rand der Kappe auf dem Zahnfleisch aufliegt, so dass der Reinigungsvorgang automatisch, oder durch Knopfdruck startet.

Die Erfindung wird nachfolgend an einem Ausführungsbeispiel näher erläutert. Die Zugehörigen Zeichnungen zeigen in:
- Fig. 1: eine schematische Unteransicht einer erfindungsgemäßen Vorrichtung zur Zahnreinigung bestehend aus einer einen Zahnraum umschließenden Kappe mit einem Handgriff;
- Fig. 2:: eine Querschnittdarstellung einer das Zahnfleisch sowie eine Zahnkrone umgebenden Kappe nach Fig. 1 im aufgesetzten/betriebsbereiten Zustand, jedoch ohne Borsten, und
- Fig. 3:: die Kappe nach Fig. 2 mit im Innenraum ausgebildeten Borsten, die andeutungsweise dargestellt sind und den Zahnraum frei halten.

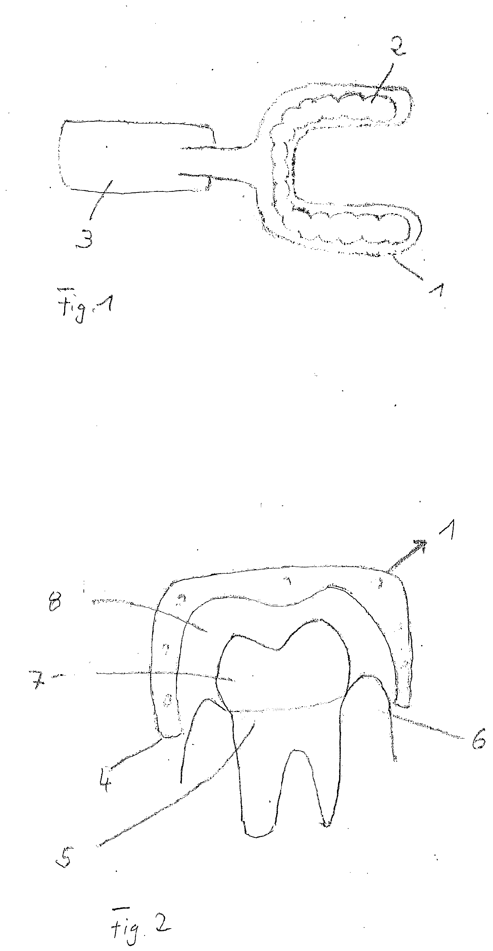

Die erfindungsgemäße Vorrichtung zur Zahnreinigung besteht hauptsächlich aus einer, im Querschnitt gesehen, u-förmigen Kappe 1, deren sonstige Kontur dem natürlichen Verlauf eines menschlichen oder tierischen Kiefers entspricht, d.h. dass die Kappe in der Draufsicht ebenfalls eine u-ähnliche Form aufweist und die mindestens einen Zahnraum 2 frei hält, ist in Fig. 1 dargestellt. Zur einfachen Handhabung der Kappe 1 ist diese mit einem einstückig mit dieser verbundenen oder lösbaren Handgriff 3 versehen, der verschiedene Aufgaben erfüllt, wie noch zu erläutern ist. Die Kappe 1 entspricht grundsätzlich etwa der Form eines üblichen Zahnabdrucklöffels aus einem zumindest teilweise nachgiebigen Material.

Fig. 2 zeigt Einzelheiten der Kappe 1 im Querschnitt, die mit ihrem unteren Rand 4 auf dem den Zahnhals 5 umgebenden Zahnfleisch 6 in Gebrauchslage dichtend aufliegt. Die Kappe 1 umschließt die Zahnkrone 7 derart, dass ein Innenraum 8 (Lumen) freigehalten wird.

Der untere Rand 4 der Kappe 1 kann aus einem nachgiebigen Material bestehen, oder auch mit einem individuellen zusätzlichen Dichtelement versehen sein.

Von besonderer Bedeutung für die erfindungsgemäße Vorrichtung zur Zahnreinigung ist, dass die Kappe 1 an die individuelle Form des menschlichen oder tierischen Ober-/Unterkiefers einschließlich der vorhandenen Zähne angepasst ist, bzw. angepasst sein muss.

Die Kappe 1 ist zur Erzeugung von Schwingungen mit einem geeigneten Antrieb, wie einem Ultraschall-Schwingungserzeuger oder Piezoschwingern gekoppelt. Die Ultraschall-oder sonstigen Schwingungen können sowohl translatorisch als auch rotatorisch, oder als überlagerte Schwingungen, erzeugt werden. Um mit Schwingungen eine Reinigungswirkung zu erzielen, muss der Innenraum der aufgesetzten Kappe mit einem fluorisierten flüssigen oder pastösen Zahnpflegemittel und/oder antibakteriellen Mittel, einem Gel oder einer Reinigungsflüssigkeit gefüllt sein.

Die Kappe 1 kann sowohl aus einem geeigneten elastischen, plastischen oder nachgiebigen Material, wie Kunststoff, als auch aus einem unelastischen Material, wie Keramik, Titan oder einem anderen mundverträglichen Material, bestehen. Bei der Auswahl des Materials muss jedoch unbedingt darauf geachtet werden, dass keine materialbedingten allergischen Reaktionen im Mund provoziert werden.

Eine individuelle und kostengünstige Fertigung der Kappe 1 lässt sich dadurch realisieren, dass diese mit Hilfe eines 3D Druckers entsprechend einem 3D-Scan des Ober-/Unterkiefers einschließlich vorhandener Zähne ausgedruckt wird. Alternativ kann als Vorlage auch ein Zahnabdruck des Ober-/Unterkiefers dienen, der mit einem üblichen Zahnabrucklöffel und einer Abdruckmasse hergestellt worden ist, wobei in jedem Fall in der Kappe 1 der die Zahnkronen 7 umgebende Innenraum 8 (Lumen) frei gehalten werden muss.

Bei dem 3D Druck handelt es sich um die einfachste und kostengünstigste Möglichkeit, individuell angepasste Kappen 1 herzustellen.

Der Handgriff 3 kann mit der Kappe 1 fest, oder lösbar verbunden sein, wobei der Handgriff 3 im Inneren einen Speicher zur Aufnahme eines fluorisierten flüssigen oder pastösen Zahnpflege- und/oder antibakteriellen Mittels, eines Gels, eines Pulvers oder auch einer Reinigungsflüssigkeit, enthalten kann.

Alternativ kann der Handgriff auch mit entsprechenden externen Vorräten verbunden sein. Damit ist über geeignete Kanäle sowie Öffnungen in der Innenwand der Kappe 1 eine dosierte Befüllung des Innenraumes 8 (Lumen) möglich.

Weiterhin erfolgt über den Handgriff 3 eine Medien- und Energiezuführung für einen mit der Kappe 1 gekoppelten, oder koppelbaren Antrieb, der die Borsten 9 und/oder die Kappe 1 in translatorische oder rotatorische Schwingungen mit fester oder einstellbarer Amplitude versetzt, wobei auch überlagerte Schwingungen möglich sind. Im Handgriff kann weiterhin auch eine geeignete Software zur Realisierung von Smart Funktionen gespeichert sein.

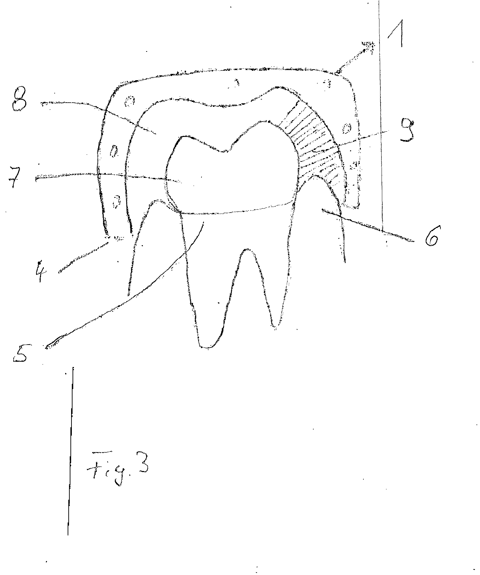

Um eine Anwendungsmöglichkeit ähnlich einer Zahnbürste zu schaffen, ist der Innenraum 8 (Lumen) der Kappe 1 mit einer Vielzahl von auf die Zahnkronen 7 gerichteten Borsten 9 aus Nylon- oder Polyesterfasern versehen, welche nur den unmittelbaren Zahnraum 2 frei halten (Fig. 3). Die inneren Enden der Borsten 9 müssen an sämtlichen Zahnkronen 7 und dem jeweiligen Zahnhals 5 mit einer vorgegebenen Druckkraft und in einem vorgegebenen Winkel anliegen und auch in die Zahnzwischenräume zwischen den Zahnkronen 7 ragen. Die Borsten können gleichzeitig mit dem 3D Druck in die Kappe eingearbeitet werden. Bevorzugt bestehen die Borsten aus Nylon oder Polyester, deren freie Enden abgerundet sind.

Die Borsten können sich auch auf einer aus hygienischen Gründen wechselbaren Matte befinden, die entweder durch Klebematerialien, durch Druck oder an Schienen, bzw. anderen Befestigungsmitteln, auf der Innenseite der Kappe befestigt werden kann. Anstelle der Borsten können sich auf der Matte auch Noppen aus Gummi oder einem anderen Material befinden.

Dem flüssigen und/oder pastösen Zahnpflegemittel kann ein Schleifmittel zugemischt sein, um eine verbesserte Reinigungswirkung zu erzielen, oder um die Reinigungszeit zu verkürzen.

Bei der Anwendung einer Kappe 1, ohne zusätzliche Borsten wird die gewünschte Reinigungswirkung durch Kavitationskräfte erreicht, die durch das mit der Kappe 1 in Schwingungen versetzte Zahnpflegemittel im Innenraum 8 der Kappe 1 entstehen.

Die individuell angepasste Kappe 1 kann ohne zusätzliche Borsten mit einem Kanalisationssystem ausgestattet sein, um eine mechanische Entfernung des Zahnbelags zu realisieren. Hierzu wird ein mittels Druckluft aus einem externen Vorrat ausgeworfener Strahl aus Wasser, Salz und Sand und/oder einem Pulver auf die zu reinigenden Zähne gerichtet, wodurch der gewünschte Reinigungseffekt erreicht wird. Das Pulver kann aus Natriumkarbonat bestehen, oder ein Glycin-Pulver sein, womit eine verbesserte Reinigungswirkung erzielt werden kann, oder um die Reingungszeit zu verkürzen.

Zusätzlich kann die Kappe 1 mit einem Plasmaerzeuger versehen sein, der nach dem Aufsetzen der Kappe 1 auf den Ober-/Unterkiefer nach Erzeugen eines ausreichenden Unterdrucks im Innenraum 8 (Lumen) der Kappe 1 ein Plasma zündet, oder dass im Innenraum 8 UV-Strahler angeordnet ist, der nach dem Aufsetzen der Kappe 1 auf den Ober-/Unterkiefer aktiviert wird, so dass eine zusätzliche antibakterielle Wirkung erzielt wird. Mit dem Plasma wird die Entstehung eines Biofilmes gehemmt, dieser abgetötet oder abgetragen.

Es ist auch eine Applikation von Laser zur Beseitigung von Plaque möglich.

Alternativ und mit der gleichen Wirkung kann der Innenraum der Kappe 1 auch mit Ozon befüllt werden.

Die Benutzung der vorstehend beschriebenen Vorrichtung zur Zahnreinigung ist besonders einfach, weil der Benutzer lediglich die für den entsprechenden Kiefer vorgesehene Kappe mit oder ohne Borsten auszuwählen und die Kappe 1 bündig auf die Zähne aufsetzen muss, so dass der Rand der Kappe auf dem Zahnfleisch aufliegt. Der Reinigungsvorgang startet dann automatisch, oder auf Knopfdruck und erfolgt entsprechend einem vorgegebenen Programmablauf.

Grundsätzlich ist es mit einer entsprechend angepassten Kappe 1 auch möglich, das Gebiss von Hunden oder anderen Tieren zu reinigen.
[1] H. Loe, "Oral hygiene in the prevention of caries and periodontal disease," Int Dent J, vol. 50, no. 3, pp. 129-139, 2000.
[2] N.P.A. Lang, Rolf; Loe, Harald, (Ed.), Proceedings of the European Workshop on Mechanical Plaque Control., Quintessence Publishing Co. Ltd, Berlin, 1998.
[3] M.D. Lagerweij and C. van Loveren, "Declining Caries Trends: Are We Satisfied?," Curr Oral Health Rep, vol. 2, no. 4, pp. 212-217, 2015.
[4] J.M. Albandar, "Epidemiology and risk factors of periodontal diseases," Dent Clin North Am, vol. 49, no. 3, pp. 517-532, v-vi, 2005.
[5] J.W. Stamm, "Epidemiology of gingivitis," J Clin Periodontol, vol. 13, no. 5, pp. 360-370, 1986.
[6] L.J. Brown and H. Loe, "Prevalence, extent, severity and progression of periodontal disease," Periodontol 2000, vol. 2, no., pp. 57-71, 1993.
[7] B. Holtfreter, T. Kocher, T. Hoffmann, M. Desvarieux and W. Micheelis, "Prevalence of periodontal disease and treatment demands based on a German dental survey (DMS IV)," J Clin Periodontol, vol. 37, no. 3, pp. 211-219, 2010.
[8] P.I. Eke, B.A. Dye, L. Wei, G.O. Thornton-Evans and R.J. Genco, "Prevalence of periodontitis in adults in the United States: 2009 and 2010," J Dent Res, vol. 91, no. 10, pp. 914-920, 2012.
[9] T. Pilot, "The periodontal disease problem. A comparison between industrialised and developing countries," Int Dent J, vol. 48, no. 3 Suppl 1, pp. 221-232, 1998.
[10] A.M. Roos-Jansaker, C. Lindahl, H. Renvert and S. Renvert, "Nine- to fourteen-year follow-up of implant treatment. Part II: presence of peri-implant lesions," J Clin Periodontol, vol. 33, no. 4, pp. 290-295, 2006.
[11] O.C. Koldsland, A.A. Scheie and A.M. Aass, "Prevalence of peri-implantitis related to severity of the disease with different degrees of bone loss," J Periodontol, vol. 81, no. 2, pp. 231-238, 2010.
[12] J. Derks, D. Schaller, J. Hakansson, J.L. Wennstrom, C. Tomasi and T. Berglundh, "Effectiveness of Implant Therapy Analyzed in a Swedish Population: Prevalence of Peri-implantitis," J Dent Res, vol. 95, no. 1, pp. 43-49, 2016.
[13] M.S. Tonetti, I.L. Chapple, S. Jepsen and M. Sanz, "Primary and secondary prevention of periodontal and peri-implant diseases: Introduction to, and objectives of the 11th European Workshop on Periodontology consensus conference," J Clin Periodontol, vol. 42 Suppl 16, no., pp. S1-4, 2015.
[14] M. Schatzle, H. Loe, N.P. Lang, W. Burgin, A. Anerud and H. Boysen, "The clinical course of chronic periodontitis," J Clin Periodontol, vol. 31, no. 12, pp. 1122-1127, 2004.
[15] N.P. Lang, M.A. Schatzle and H. Loe, "Gingivitis as a risk factor in periodontal disease," J Clin Periodontol, vol. 36 Suppl 10, no., pp. 3-8, 2009.
[16] P.P. Hujoel, H. Loe, A. Anerud, H. Boysen and B.G. Leroux, "Forty-five-year tooth survival probabilities among men in Oslo, Norway," J Dent Res, vol. 77, no. 12, pp. 2020-2027, 1998.
[17] P. Axelsson, B. Nystrom and J. Lindhe, "The long-term effect of a plaque control program on tooth mortality, caries and periodontal disease in adults. Results after 30 years of maintenance," J Clin Periodontol, vol. 31, no. 9, pp. 749-757, 2004.
[18] J. Lindhe and S. Nyman, "Long-term maintenance of patients treated for advanced periodontal disease," J Clin Periodontol, vol. 11, no. 8, pp. 504-514, 1984.
[19] L.P. Cancro and S.L. Fischman, "The expected effect on oral health of dental plaque control through mechanical removal," Periodontol 2000, vol. 8, no., pp. 60-74, 1995.
[20] G. Dahlen, J. Lindhe, K. Sato, H. Hanamura and H. Okamoto, "The effect of supragingival plaque control on the subgingival microbiota in subjects with periodontal disease," J Clin Periodontol, vol. 19, no. 10, pp. 802-809, 1992.
[21] C.H. Splieth, J. Christiansen and L.A. Foster Page, "Caries Epidemiology and Community Dentistry: Chances for Future Improvements in Caries Risk Groups. Outcomes of the ORCA Saturday Afternoon Symposium, Greifswald, 2014. Part 1," Caries Res, vol. 50, no. 1, pp. 9-16, 2016.
[22] K.S. Kim, T.H. Yoon, J.W. Lee and D.J. Kim, "Interactive toothbrushing education by a smart toothbrush system via 3D visualization," Comput Methods Programs Biomed, vol. 96, no. 2, pp. 125-132, 2009.
[23] P. Weinstein, P. Milgrom, S. Melnick, B. Beach and A. Spadafora, "How effective is oral hygiene instruction? Results after 6 and 24 weeks," J Public Health Dent, vol. 49, no. 1, pp. 32-38, 1989.
[24] T.G. Wilson, Jr., M.E. Glover, J. Schoen, C. Baus and T. Jacobs, "Compliance with maintenance therapy in a private periodontal practice," J Periodontol, vol. 55, no. 8, pp. 468-473, 1984.
[25] L. Schou, C. Wight, N. Clemson, S. Douglas and C. Clark, "Oral health promotion for institutionalised elderly," Community Dent Oral Epidemiol, vol. 17, no. 1, pp. 2-6, 1989.
[26] B.-O.L. Höpflinger F, Zumbrunn A, Pflegebedürftigkeit und Langzeitpflege im Alter. Aktualisierte Szenarien für die Schweiz. Entwicklung der Pflegebedürftigkeit im Alter., Verlag Hans Huber, Hogrefe AG Bern, 2011, pp. 33-54.
[27] C. Besimo, Besimo-Meyer, R., "Orale Gesundheit von Menschen mit Demenz," Schweiz Z Ganzheitsmed, vol. 27 no., pp. 44-49, 2015
[28] S.L. Yankell and R.C. Emling, "Laboratory interproximal access efficacy comparison of bi-level and flat bristled toothbrushes," J Clin Dent, vol. 4, no. 4, pp. 128-130, 1994.
[29] D.W. Volpenhein, M.E. Walsh, P.A. Dellerman and T.A. Burkett, "A new method for in vitro evaluation of the interproximal penetration of manual toothbrushes," J Clin Dent, vol. 5, no. 1, pp. 27-33, 1994.
[30] N.K.H. C.R. Allen, I.D.M. Macgregor, "Development of a force-sensing toothbrush instrument using PIC micro-controller technology for dental hygiene," Mechatronics, vol. Volume 6, no. Issue 2, pp. 125-140, 1996.
[31] G.A. van der Weijden and K.P. Hioe, "A systematic review of the effectiveness of selfperformed mechanical plaque removal in adults with gingivitis using a manual toothbrush," J Clin Periodontol, vol. 32 Suppl 6, no., pp. 214-228, 2005.
[32] C. Poche, H. McCubbrey and T. Munn, "The development of correct toothbrushing technique in preschool children," J Appl BehavAnal, vol. 15, no. 2, pp. 315-320, 1982.
[33] A. Bergenholtz, L.B. Gustafsson, N. Segerlund, C. Hagberg and N. Ostby, "Role of brushing technique and toothbrush design in plaque removal," Scand J Dent Res, vol. 92, no. 4, pp. 344-351, 1984.
[34] M. Morita, K. Nishi and T. Watanabe, "Comparison of 2 toothbrushing methods for efficacy in supragingival plaque removal. The Toothpick method and the Bass method," J Clin Periodontol, vol. 25, no. 10, pp. 829-831, 1998.
[35] M. Poyato-Ferrera, J.J. Segura-Egea and P. Bullon-Fernandez, "Comparison of modified Bass technique with normal toothbrushing practices for efficacy in supragingival plaque removal," Int J Dent Hyg, vol. 1, no. 2, pp. 110-114, 2003.

### Bezugszeichenliste

- 1: Kappe
- 2: Zahnraum
- 3: Handgriff
- 4: unterer Rand
- 5: Zahnhals
- 6: Zahnfleisch
- 7: Zahnkrone
- 8: Innenraum
- 9: Borsten

## Patentansprüche

1. Vorrichtung zur Zahnreinigung, insbesondere zur gleichzeitigen Reinigung sämtlicher vorhandener Zähne und/oder fest montierter Prothesen des Unter- und Oberkiefers einer Person oder eines Tieres beliebigen Alters, mit einer durch 3-D-Scan des Ober-/Unterkiefers einschließlich vorhandener Zähne oder eines Zahnabdruckes des Ober-/Unterkiefers auf die individuelle Form des menschlichen oder tierischen Ober-/Unterkiefers einschließlich vorhandener Zahnkronen (7) angepassten und in Schwingungen versetzbaren, einen Innenraum (8) aufweisenden Kappe (1) mit einem U-förmigen Querschnitt, sowie einer im Innenraum (8) zusätzlich vorsehbaren Vielzahl von Borsten (9), wobei die Kappe (1) mit einem Handgriff (3) zur Medien- und Energiezuführung verbunden ist, wobei zumindest die Kappe (1) ein Ausdruck eines 3-D-Druckers entsprechend dem 3-D-Scan oder der Positivkopie des Zahnabdruckes ist, wobei die Borsten (9) gleichzeitig mit dem 3-D Druck in die Kappe (1) eingearbeitet wurden, oder sich auf einer wechselbaren Matte befinden, und wobei die Kappe (1) dichtend auf das die Zähne umgebende Zahnfleisch (6) am Zahnhals (5), den Innenraum (Lumen) umschließend, aufsetzbar ist, derart, dass die Zähne und der Zahnhals bzw. der Übergang vom Zahn zum Zahnfleisch vollständig und dicht von dem Innenraum (8) umschlossen sind, und wobei die inneren Enden der Borsten (9) einen Zahnraum (2) umschließend an sämtlichen Zahnkronen (7) und dem jeweiligen Zahnhals (5) mit einer vorgegebenen Druckkraft und einem vorgegebenen Winkel anliegen und auch in die Zahnzwischenräume zwischen den Zähnen ragen.

2. Vorrichtung nach Anspruch 1, **dadurch gekennzeichnet, dass** zumindest die Kappe (1) aus einem elastischen Material, wie einem Kunststoff, oder aus einem unelastischen Material, wie Keramik, Titan oder einem anderen biokompatiblen und/oder antibakteriellen Material, besteht.

3. Vorrichtung nach den Ansprüchen 1 bis 2, **dadurch gekennzeichnet, dass** der Handgriff (3) mit der Kappe (1) fest, oder lösbar verbunden ist und wobei der Handgriff (3) mit einem fluorisierten flüssigen oder pastösen Zahnpflege- und/oder antibakteriellen Mittel oder einem Gel bzw. einer Reinigungsflüssigkeit befüllbar oder zumindest mit entsprechenden Vorräten verbindbar ist, derart, dass eine dosierte Befüllung des Innenraumes (8) erfolgt.

4. Vorrichtung nach Anspruch 3, **dadurch gekennzeichnet, dass** die Kappe (1) zur Erzeugung eines mittels Druckluft ausgeworfenen Strahls aus Wasser mit einem Kanalisationssystem ausgestattet ist, wobei dem Wasser ein Pulver zugemischt ist.

5. Vorrichtung nach Anspruch 4, **dadurch gekennzeichnet, dass** das Pulver aus einer Mischung aus Salz und Sand, Natriumkarbonat oder Glycin besteht.

6. Vorrichtung nach Anspruch 1, **dadurch gekennzeichnet, dass** die Matte auf der sich die Borsten oder Gumminoppen befinden, mittels einer Klebeverbindung, durch Druck bzw. Klemmen oder an Schienen an der Innenseite der Kappe befestigbar ist.

7. Vorrichtung nach Anspruch 6, **dadurch gekennzeichnet, dass** die Borsten (9) aus Nylon oder Polyester bestehen, deren freie Enden abgerundet sind.

8. Vorrichtung nach einem der Ansprüche 1 bis 6, **dadurch gekennzeichnet, dass** die Kappe (1) mit einem Antrieb gekoppelt ist, der die Borsten (9) und/oder die Kappe (1) in translatorische oder rotatorische Schwingungen mit fester oder einstellbarer Amplitude versetzt, oder wobei der Antrieb ein Piezo-Antrieb ist, der Schall- oder Ultraschallschwingungen generiert.

9. Vorrichtung nach einem der Ansprüche 1 bis 8, **dadurch gekennzeichnet, dass** der Kappe (1) ohne Borsten ein Plasmaerzeuger zugeordnet ist, der nach dem Aufsetzen der Kappe (1) auf den Ober-/Unterkiefer nach Erzeugen eines ausreichenden Unterdrucks im Innenraum (Lumen) der Kappe ein Plasma zündet, oder dass im Innenraum UV-Strahler angeordnet sind, der nach dem Aufsetzen der Kappe (1) auf den Ober-/Unterkiefer aktiviert wird.

10. Vorrichtung nach einem der Ansprüche 1 bis 9, **dadurch gekennzeichnet, dass** der Innenraum der Kappe (1) mit Ozon befüllbar ist, oder mit einer Laserapplikation versehen ist.

## Claims

1. Device for cleaning teeth, in particular for simultaneous cleaning of all the existing teeth and/or permanent prostheses of the lower jaw and upper jaw of a person or of an animal of any age, with a cap (1) of U-shaped cross section which, by 3D scanning of the upper/lower jaw, including the existing teeth, or of a dental impression of the upper/lower jaw, is adapted to the individual shape of the human or animal upper/lower jaw including existing crowns (7), and which can be moved in oscillations and has an interior (8), and with a multiplicity of bristles (9) that can additionally be provided in the interior (8), wherein the cap (1) is connected to a handle (3) for delivery of media and energy, wherein at least the cap (1) is a printout of a 3D printer according to the 3D scan or the positive copy of the dental impression, wherein the bristles (9) have been incorporated into the cap (1) at the same time as the 3D printing or are located on an exchangeable mat, and wherein the cap (1) can be placed sealingly onto the gum (6) surrounding the teeth at the neck (5), enclosing the interior (lumen), in such a way that the teeth and the neck or the transition from the tooth to the gum are completely and tightly enclosed by the interior (8), and wherein the inner ends of the bristles (9), enclosing a tooth space (2), bear on all the crowns (7) and the respective neck (5) with a predetermined pressing force and at a predetermined angle and also protrude into the interdental spaces between the teeth.

2. Device according to Claim 1, **characterized in that** at least the cap (1) is made of an elastic material, such as a plastic, or of a non-elastic material, such as ceramic, titanium or another biocompatible and/or antibacterial material.

3. Device according to Claims 1 and 2, **characterized in that** the handle (3) is connected to the cap (1) permanently or releasably, wherein the handle (3) can be filled with a fluorinated liquid or pasty dental hygiene agent and/or antibacterial agent or a gel or a cleaning liquid or is at least connectable to corresponding storage means in such a way as to permit dosed filling of the interior (8) .

4. Device according to Claim 3, **characterized in that** the cap (1) is equipped with a system of channels in order to generate a jet of water that is ejected by means of compressed air, wherein a powder is admixed to the water.

5. Device according to Claim 4, **characterized in that** the powder is composed of a mixture of salt and sand, sodium carbonate or glycine.

6. Device according to Claim 1, **characterized in that** the mat, on which the bristles or rubber knobs are located, can be fastened to the inner face of the cap by means of an adhesive connection, by pressure or clamping, or on rails.

7. Device according to Claim 6, **characterized in that** the bristles (9) are made of nylon or polyester, their free ends being rounded.

8. Device according to one of Claims 1 to 6, **characterized in that** the cap (1) is coupled to a drive which moves the bristles (9) and/or the cap (1) in translatory or rotatory oscillations of fixed or adjustable amplitude, or wherein the drive is a piezo drive which generates sonic or ultrasonic oscillations.

9. Device according to one of Claims 1 to 8, **characterized in that** the cap (1), without bristles, is assigned a plasma generator which, after placement of the cap (1) onto the upper/lower jaw, ignites a plasma after a sufficient negative pressure has been generated in the interior (lumen) of the cap, or **in that** a UV emitter is arranged in the interior and is activated after the cap (1) has been placed onto the upper/lower jaw.

10. Device according to one of Claims 1 to 9, **characterized in that** the interior of the cap (1) can be filled with ozone or is provided with a laser application.

## Revendications

1. Dispositif de nettoyage des dents, notamment pour le nettoyage simultané de toutes les dents présentes et/ou des prothèses montées à demeure de la mâchoire inférieure et supérieure d'une personne ou d'un animal d'âge quelconque, comprenant un capuchon (1) de section transversale en forme de U possédant un espace intérieur (8), adapté par balayage 3D de la mâchoire inférieure/supérieure, y compris les dents présentes, ou d'une empreinte dentaire de la mâchoire inférieure/supérieure à la forme individuelle de la mâchoire inférieure/supérieure humaine ou animale, y compris les couronnes dentaires (7) présentes, et pouvant être mis en oscillation, ainsi qu'une pluralité de soies (9) pouvant en plus être prévues dans l'espace intérieur (8), le capuchon (1) étant relié à une poignée (3) servant à l'arrivée de fluide et d'énergie, au moins le capuchon (1) étant une impression d'une imprimante 3D conforme au balayage 3D ou à la copie positive de l'empreinte dentaire, les soies (9) ayant été incorporées dans le capuchon (1) simultanément avec l'impression 3D, ou se trouvant sur une natte interchangeable, et le capuchon (1) pouvant être posé de manière étanche au niveau du collet dentaire (5) sur la gencive (6) qui entoure les dents en enveloppant l'espace intérieur (lumière), de sorte que les dents et le collet dentaire ou la transition de la dent à la gencive soient entièrement et de manière étanche enveloppés par l'espace intérieur (8), et les extrémités intérieures des soies (9) reposant en entourant un espace dentaire (2) contre toutes les couronnes dentaires (7) et le collet dentaire (5) respectif avec une force de pression prédéfinie et un angle prédéfini et faisant également saillie entre les espaces interdentaires entre les dents.

2. Dispositif selon la revendication 1, **caractérisé en ce qu'**au moins le capuchon (1) se compose d'un matériau élastique, tel qu'une matière plastique, ou d'un matériau non élastique, tel que la céramique, le titane ou un autre matériau biocompatible et/ou antibactérien.

3. Dispositif selon l'une des revendications 1 à 2, **caractérisé en ce que** la poignée (3) est reliée à demeure ou de manière amovible au capuchon (1) et la poignée (3) pouvant être remplie d'un fluide d'entretien dentaire et/ou antibactérien fluoré liquide ou pâteux ou encore d'un gel ou d'un liquide de nettoyage ou pouvant au moins être raccordée à des réservoirs correspondants, de sorte qu'un remplissage dosé de l'espace intérieur (8) a lieu.

4. Dispositif selon la revendication 3, **caractérisé en ce que** le capuchon (1) est équipé pour générer un jet d'eau éjecté au moyen d'air comprimé, une poudre étant mélangée à l'eau.

5. Dispositif selon la revendication 4, **caractérisé en ce que** la poudre se compose d'un mélange de sel et de sable, de carbonate de sodium ou de glycine.

6. Dispositif selon la revendication 1, **caractérisé en ce que** la natte sur laquelle se trouvent les soies ou des touffes en caoutchouc peut être fixée au côté intérieur du capuchon au moyen d'une liaison collée, par pression ou serrage ou sur des barrettes.

7. Dispositif selon la revendication 6, **caractérisé en ce que** les soies (9) se composent de nylon ou de polyester dont les extrémités libres sont arrondies.

8. Dispositif selon l'une des revendications 1 à 6, **caractérisé en ce que** le capuchon (1) est couplé à un mécanisme d'entraînement qui amène les soies (9) et/ou le capuchon (1) dans des oscillations translatoires ou rotatives ayant une amplitude fixe ou réglable, et le mécanisme d'entraînement étant un mécanisme d'entraînement piézoélectrique qui génère des oscillations sonores ou ultrasonores.

9. Dispositif selon l'une des revendications 1 à 8, **caractérisé en ce qu'**un générateur de plasma est associé au capuchon (1) sans soies, lequel allume un plasma après la pose du capuchon (1) sur la mâchoire supérieure/inférieure et après avoir généré une dépression suffisante dans l'espace intérieur (lumière) du capuchon, ou **en ce que** des projecteurs d'UV sont disposés dans l'espace intérieur, lesquels sont activés après avoir posé le capuchon (1) sur la mâchoire supérieure/inférieure.

10. Dispositif selon l'une des revendications 1 à 9, **caractérisé en ce que** l'espace intérieur du capuchon (1) peut être rempli d'ozone ou est pourvu d'une application de laser.
